(19) **Europäisches Patentamt / European Patent Office / Office européen des brevets**

(11) **EP 4 163 484 B1**

(12) **FASCICULE DE BREVET EUROPEEN**

(45) Date de publication et mention de la délivrance du brevet:
**28.05.2025 Bulletin 2025/22**

(21) Numéro de dépôt: **22199724.0**

(22) Date de dépôt: **05.10.2022**

(51) Classification Internationale des Brevets (IPC):
**F02D 13/02** (2006.01)   **F02D 41/00** (2006.01)
**F02D 41/22** (2006.01)

(52) Classification Coopérative des Brevets (CPC):
**F02D 41/221; F02D 13/0234; F02D 13/0269; F02D 41/0002;** F02D 2041/001; F02D 2041/227

(54) **PROCÉDÉ DE CONTRÔLE DU COUPLE DÉLIVRÉ PAR UN MOTEUR À COMBUSTION INTERNE DE VÉHICULE AUTOMOBILE À CYCLE ASYMÉTRIQUE**

VERFAHREN ZUR STEUERUNG DES VON EINEM VERBRENNUNGSMOTOR EINES KRAFTFAHRZEUGS ABGEGEBENEN DREHMOMENTS MIT EINEM ASYMMETRISCHEN ZYKLUS

METHOD FOR CONTROLLING THE TORQUE OUTPUT OF AN INTERNAL COMBUSTION ENGINE OF AN AUTOMOBILE WITH ASYMMETRIC CYCLE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **06.10.2021 FR 2110598**

(43) Date de publication de la demande:
**12.04.2023 Bulletin 2023/15**

(73) Titulaire: **NEW H POWERTRAIN HOLDING, S.L.U.**
**47008 Valladolid (ES)**

(72) Inventeurs:
• **Guerout, Romain**
**91510 Lardy (FR)**
• **Lefevre, Cedric**
**91510 Lardy (FR)**
• **Pereira, Luc**
**91510 Lardy (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**EP-A1- 3 199 786    DE-A1- 102019 220 402**
**DE-A1- 102020 112 111**

## Description

### Domaine technique

La présente invention concerne les moteurs à combustion interne de véhicule automobile à cycle asymétrique, tels que les moteurs fonctionnant selon le cycle d'Atkinson ou de Miller, dotés d'un système de calage variable des soupapes d'admission.

Elle concerne en particulier, dans une application de l'invention, la gestion du couple fourni par le moteur en cas d'indisponibilité du système de calage variable.

### Techniques antérieures

Classiquement, le conducteur du véhicule détermine, en actionnant la pédale d'accélérateur, une consigne d'accélération du véhicule. A partir de la consigne d'accélération et du régime du moteur, un calculateur définit une consigne de couple moteur Csp à obtenir pour atteindre cette consigne d'accélération. La consigne de couple est traduite en une consigne de débit massique d'air Qair,sp, en une valeur d'avance à l'allumage optimisant le rendement, et en une consigne de richesse généralement égale à 1, qui correspond au débit du carburant qu'il faut brûler dans les proportions stœchiométriques pour obtenir le couple tout en faisant fonctionner le catalyseur dans sa plage de fonctionnement catalytique dans laquelle il est apte à traiter les hydrocarbures imbrûlés, le monoxyde de carbone et les oxydes d'azote.

Par ailleurs, lorsque le véhicule est doté d'un circuit de recirculation partielle des gaz d'échappement à l'admission du moteur, on définit aussi une consigne de débit de gaz recirculés Qegr,sp qui correspond au taux de recirculation à appliquer pour respecter la consommation de carburant visée.

Un calculateur du moteur ajuste alors différents actionneurs du moteur pour régler les différents paramètres sur leurs valeurs de consigne.

Le débit des gaz recirculés peut être réglé en ajustant la position d'une vanne du circuit de recirculation. Le débit massique gazeux total d'air et de gaz recirculés peut être réglé en ajustant la position angulaire d'un boîtier papillon du moteur et en outre, dans le cas d'un moteur suralimenté, en ajustant la pression de suralimentation en jouant par exemple sur l'inclinaison des ailettes de la turbine d'un turbocompresseur de suralimentation du moteur, quand il s'agit d'une turbine à géométrie variable.

L'avance à l'allumage est réglée en provoquant une étincelle aux bornes des bougies d'allumage implantées dans les cylindres du moteur à un instant correspondant à l'avance de meilleur rendement. Cependant, dans les procédés modernes, le calculateur du moteur vérifie en permanence l'apparition de cliquetis, par exemple grâce à des capteurs implantés dans les cylindres ou sur le bloc moteur en utilisant par exemple des accéléromètres. En présence de cliquetis, il est procédé à des retraits d'avance, ce qui a pour effet de diminuer le rendement. Le calculateur recalcule alors un débit d'air augmenté correspondant à cette valeur de moindre avance à l'allumage pour conserver le couple et réajuste les actionneurs de la chaîne d'air en conséquence.

Le fait de régler le débit d'air en ajustant la position du boîtier papillon et donc en créant une pression dans le collecteur d'admission du moteur d'autant plus faible en aval du papillon que le papillon est fermé, a cependant pour inconvénient de générer des pertes par pompage, pénalisantes pour le rendement moteur, ce qui s'avère donc plutôt préjudiciable à faible charge sur un moteur à essence.

L'utilisation des cycles asymétriques d'Atkinson ou de Miller permet d'éviter ces pertes par pompage, tout en maîtrisant la masse d'air admise, c'est-à-dire tout en admettant le même débit massique d'air nécessaire à la production du couple à richesse 1 que si le papillon était partiellement refermé. Dans les deux cas, on ajuste la masse d'air admise dans la chambre de combustion par le contrôle des soupapes admission, avec des valeurs de retard de fermeture à l'admission (RFA) très décalées par rapport au point mort bas (PMB). Plus précisément la fermeture des soupapes d'admission intervient nettement en retard par rapport au PMB dans le cas du cycle d'Atkinson, de sorte qu'une partie de l'air admis dans les cylindres jusqu'au PMB est refoulé de chaque cylindre lors de la remontée du piston vers le point mort haut (PMH), jusqu'à ce que les soupapes d'admission se ferment. Au contraire, la fermeture des soupapes d'admission intervient nettement en avance par rapport au PMB dans le cas du cycle de Miller, de sorte que l'air cesse d'être admis dans chaque cylindre avant que le piston ait atteint le PMB. L'actionneur principal de contrôle de la charge en air du moteur devient alors le système de calage variable des soupapes à l'admission dans les deux cas de figure, à la place du boitier papillon dans les moteurs traditionnels qui n'utilisent pas l'un de ces cycles.

Le principe des cycles Atkinson/Miller est double. Il s'agit non seulement de limiter les pertes par pompage à charge partielle, mais aussi de maximiser la phase de détente par rapport à la phase de compression. Ainsi, la longueur de la course utilisée pour la détente entre le point mort haut et point mort bas devient supérieure à la longueur de la course utilisée pour la compression entre la fermeture des soupapes admission au RFA et le point mort bas. Cet écart nécessite toutefois de choisir un taux de compression géométrique du moteur plus élevé que dans le cas d'un moteur traditionnel.

Un problème lié aux forts taux de compression géométriques des moteurs à cycle d'Atkinson/Miller peut apparaître lorsqu'on ne peut plus maîtriser la distribution variable, notamment le RFA. Ainsi, en cas de panne du système de contrôle des soupapes d'admission ou d'indisponibilité fonctionnelle temporaire de celui-ci, il n'est plus possible de maîtriser la charge en air par l'ajustement du RFA. On subit alors le RFA et le taux de compression du moteur tels qu'ils sont dans cette position de dysfonctionnement du système, que ce soit la position définie comme position au repos ou de sauvegarde du système, ou celle dans laquelle le système est tombé en panne. Ainsi, si cette position introduit, par exemple, dans le pire des cas, un angle de fermeture des soupapes admission proche ou égal à la position du point mort bas, correspondant à la position RFA de la pleine charge, on en vient alors à subir le taux de compression géométrique élevé du moteur à cycle d'Atkinson/Miller et à devoir régler la masse d'air admise par la pression collecteur et le papillon d'admission.

La problématique est alors qu'avec un tel taux de compression, le cliquetis réapparait. Cela nécessite de devoir retarder l'avance à l'allumage, ce qui dégrade le rendement de combustion, et donc, pour un même couple à réaliser, nécessite d'admettre encore plus d'air, augmentant ainsi le taux de compression effectif, défini comme le rapport entre le volume qu'occuperaient à la pression atmosphérique les gaz contenus dans la chambre de combustion en fin d'admission et le volume résiduel de la chambre de combustion au point mort haut. Cela provoque donc une aggravation du cliquetis. Il s'en suit alors un effondrement des performances du moteur, conduisant à une très forte dégradation du couple disponible.

Document DE 10 2020 112111 A1 propose une solution différente pour une moteur à combustion interne de véhicule automobile à cycle Miller/Atkinson équipé d'un système de calage variable des soupapes à l'admission. En cas de dysfonctionnement du système de calage variable la contrôle du couple maximale est exécutée en fonction de la quantité de carburant estimée en utilisant une valeur de retard de fermeture à l'admission déterminée.

**Exposé de l'invention**

Au vu de ce qui précède, le but de l'invention est de maintenir les performances d'un moteur à combustion interne de véhicule automobile à cycle asymétrique de type Atkinson ou Miller en cas de dysfonctionnement du système de distribution variable du moteur.

L'invention a donc pour objet un procédé de contrôle du couple délivré par un moteur à combustion interne de véhicule automobile à cycle asymétrique de type Atkinson ou Miller, équipé d'un système de calage variable des soupapes à l'admission, en cas de dysfonctionnement du système de calage variable.

Ce procédé comprend les étapes de :

-    Détection de l'indisponibilité du système de distribution variable,
-    Détermination d'une valeur de retard de fermeture à l'admission (RFA) correspondant au blocage du système de distribution variable,
-    Calcul d'un taux de compression effectif défini comme le rapport entre le volume d'air dans la chambre de combustion à la pression atmosphérique au moment de la fermeture des soupapes admission et le volume résiduel de la chambre de combustion au point mort haut,

-    Calcul d'une quantité d'air maximale admissible pour une pression dans le collecteur d'admission égale à la pression atmosphérique et à la température du collecteur d'admission,
-    Calcul de la pression maximale dans le collecteur d'admission en fonction de la température courante du collecteur d'admission et d'un couple maximale réalisable, a partir de la quantité d'air maximale admissible,
-    Réglage de la pression dans le collecteur d'admission à une valeur égale à la pression maximale calculée et correspondant au couple maximale réalisable.

Le procédé de contrôle de couple est ainsi configuré pour maintenir des performances acceptables du moteur à cycle asymétrique de type Atkinson ou Miller, en cas de dysfonctionnement du système de calage variable.

Dans le cas d'un moteur atmosphérique traditionnel (hors usage du cycle d'Atkinson ou de Miller), par exemple, on limite le taux de compression effectif à une valeur prédéterminée comprise entre 11 :1 et 13 :1, plage au-delà de laquelle le phénomène de cliquetis devient problématique.

Dans le cas d'un moteur suralimenté traditionnel, par exemple, on limite le taux de compression effectif à une valeur prédéterminée comprise entre 9 :1 et 11 :1 pour les mêmes raisons.

Par exemple, on peut procéder à une étape préalable de détection de l'indisponibilité du système de calage variable. Si l'indisponibilité est avérée, pour déterminer une valeur de retard de fermeture à l'admission (RFA), on peut par exemple utiliser la valeur mesurée du retard de fermeture à l'admission si cette mesure est disponible. En cas d'impossibilité de la mesure, on peut utiliser la valeur du RFA correspondant à la pleine charge, correspondant à une position proche du, ou égale au PMB ; en variante, on peut aussi utiliser le cas échéant une valeur de repos ou de sauvegarde, correspondant à une position que le système de calage variable adopte mécaniquement quand il n'est plus piloté.

L'invention a également pour objet un système de contrôle du couple délivré par un moteur à combustion interne de véhicule automobile à cycle asymétrique équipé d'un système de calage variable des soupapes à l'admission, en cas de dysfonctionnement du système de calage variable.

Le système de contrôle du couple comprend des moyens de détermination d'une valeur de retard de la fermeture admission (RFA) correspondant à un blocage du système de calage variable, des moyens de calcul d'un rapport entre le volume occupé à la pression atmosphérique par l'air admis dans la chambre de combustion, au moment de la fermeture des soupapes d'admission, et le volume résiduel de la chambre de combustion au point mort haut, des moyens de limitation du rapport calculé, des moyens de calcul d'une quantité d'air maximale admissible pour une pression dans le collecteur d'admission égale à la pression atmosphérique et à la température du collecteur d'admission, des moyens de calcul de la pression maximale dans le collecteur d'admission en fonction de la température courante du collecteur d'admission et d'un couple maximale réalisable, à partir de la quantité d'air maximale admissible, et des moyens de réglage de la pression dans le collecteur d'admission à une valeur égale à la pression maximale calculée et correspondant au couple maximal.

Dans le cas d'un moteur atmosphérique traditionnel, par exemple, le système de contrôle est configuré pour limiter le taux de compression effectif à une valeur prédéterminée comprise entre 11 :1 et 13 :1.

Dans le cas d'un moteur suralimenté traditionnel, par exemple, le système de contrôle est configuré pour limiter le taux de compression effectif à une valeur prédéterminée comprise entre 9 :1 et 11 :1.

Par exemple, le système de contrôle comprend des moyens de détection de l'indisponibilité du système de calage variable.

## Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :

[Fig 1] illustre, de manière schématique, la structure d'un moteur à combustion interne d'un véhicule automobile équipé d'un système de calage variable et d'un système de contrôle du couple selon l'invention ;
[Fig 2] illustre un organigramme du procédé de gestion de couple, mis en œuvre par le système de gestion, selon un mode de mise en œuvre de l'invention.

## Exposé détaillé d'au moins un mode de réalisation

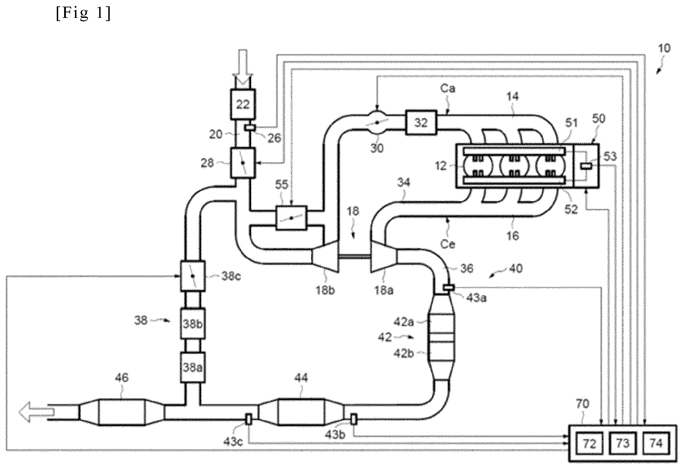

Dans l'exemple illustré dans la figure 1, le moteur à combustion interne 10 comprend, de manière non limitative, trois cylindres 12 en ligne, un collecteur d'admission d'air frais 14, un collecteur d'échappement 16, un système de turbo-compression ou turbocompresseur 18, un système de calage variable 50 des soupapes d'admission 51 du moteur et éventuellement en outre des soupapes d'échappement 52 du moteur.

Les cylindres 12 sont alimentés en air par l'intermédiaire du collecteur d'admission 14, ou répartiteur d'admission, lui-même alimenté par une conduite 20 pourvue d'un filtre à air 22 et du turbocompresseur 18 du moteur 10.

Le turbocompresseur 18 comporte essentiellement une turbine 18a entraînée par les gaz d'échappement et un compresseur 18b monté sur le même arbre que la turbine 18a et assurant une compression de l'air distribué par le filtre à air 22, dans le but d'augmenter la quantité (débit massique) d'air admise dans les cylindres 12 du moteur 10 pour un débit volumique identique.

La turbine 18a peut être du type « à géométrie variable », c'est-à-dire que la roue de la turbine est équipée d'ailettes à inclinaison variable afin de moduler la quantité d'énergie prélevée sur les gaz d'échappement, et ainsi la pression de suralimentation. En variante, l'invention peut utiliser une turbine 18a à géométrie fixe. Dans le cas de l'utilisation (non représenté) d'une turbine 18a à géométrie fixe, la quantité d'énergie prélevée par la turbine 18a est réglée en ajustant la proportion du débit des gaz d'échappement traversant la turbine, à l'aide d'une vanne de décharge à l'échappement, montée sur un circuit de contournement associé à la turbine 18a.

Le moteur à combustion interne 10 comprend ainsi un circuit d'admission Ca et un circuit d'échappement Ce.

Le circuit d'admission Ca comprend, d'amont en aval dans le sens de circulation de l'air :

- le filtre à air 22 ou boîte à air ;
- un débitmètre 26 disposé dans la conduite d'admission 20 en aval du filtre à air 22 ; le débitmètre 26 étant configuré pour mesurer la valeur réelle du débit d'air entrant dans le moteur 10 ;
- une vanne d'admission d'air 28 ;
- le compresseur 18b du turbocompresseur 18 configuré pour comprimer les gaz d'échappement recyclés à basse pression, tel que cela sera décrit ultérieurement ;
- un boîtier papillon 30 ou une vanne d'admission des gaz dans le moteur ;

- un échangeur thermique 32 configuré pour refroidir les gaz d'admission correspondant à un mélange d'air frais et de gaz recirculés après leur compression dans le compresseur 18b ; et
- le collecteur d'admission 14.

Le compresseur est associé à un circuit de contournement équipé d'une vanne de décharge à l'admission 55 qui s'ouvre en cas de fermeture brutale du boîtier papillon 30, pour éviter que l'air comprimé, se trouvant entre le compresseur 18b et le boîtier papillon 30, ne traverse le compresseur 18b et ne le dégrade, lorsque par exemple, le conducteur du véhicule lève brutalement le pied de la pédale d'accélération.

Le circuit d'échappement Ce comprend, d'amont en aval dans le sens de circulation des gaz brûlés :

- le collecteur d'échappement 16 ;
- la turbine 18a du turbocompresseur 18 configurée pour prélever de l'énergie sur les gaz d'échappement qui traversent la turbine, l'énergie de détente étant transmise au compresseur 18b par l'intermédiaire de l'arbre commun, pour la compression des gaz d'admission ; et
- un système 40 de dépollution des gaz de combustion du moteur.

En ce qui concerne le collecteur d'échappement 16, celui-ci récupère les gaz d'échappement issus de la combustion et évacue ces derniers vers l'extérieur, par l'intermédiaire d'un conduit d'échappement des gaz 34 débouchant sur la turbine 18a du turbocompresseur 18 et par une ligne d'échappement 36 montée en aval de la turbine 18a.

Le moteur 10 comprend en outre un circuit de recirculation partielle 38 des gaz d'échappement à l'admission, dit circuit « EGR » (« exhaust gas recirculation » en termes anglo-saxons).

Ce circuit 38 est ici de manière non limitative un circuit de recirculation des gaz d'échappement à basse pression, dit « EGR BP ». Il est raccordé à la ligne d'échappement 36, en aval de ladite turbine 18a, et notamment en aval du système 40 de dépollution des gaz et renvoie les gaz d'échappement vers la conduite 20 d'alimentation en air frais, en amont du compresseur 18b du turbocompresseur 18, notamment en aval du débitmètre 26. Le débitmètre 26 ne mesure que le débit d'air frais seul.

Tel qu'illustré, ce circuit 38 de recirculation comprend, dans le sens de circulation des gaz recyclés, un refroidisseur 38a, un filtre 38b, et une vanne « V EGR BP » 38c configurée pour réguler le débit des gaz d'échappement à basse pression. La vanne « V EGR BP » 38c est disposée en aval du refroidisseur 38a et du filtre 38b et en amont du compresseur 18b.

On notera que la vanne d'admission d'air 28 peut aussi servir à forcer la circulation d'un débit des gaz d'échappement à basse pression dans le circuit EGR BP dans le cas où la dépression entre le circuit d'échappement et le circuit d'admission serait insuffisante. Dans ce cas, une fermeture de la vanne 28 permettrait de créer une dépression en aval, apte à aspirer des gaz du circuit EGR BP.

Le système 40 de dépollution des gaz de combustion du moteur comprend un premier dispositif de post-traitement 42 comprenant deux catalyseurs 42a, 42b trois voies en série qui peuvent être chauffés électriquement, avec au moins une première sonde à oxygène 43a montée en amont du premier dispositif de post-traitement 42.

La première sonde à oxygène amont 43a sert généralement à réguler en boucle fermée la valeur de la richesse du mélange air-carburant dans le moteur autour d'une valeur de consigne, par exemple la valeur 1 correspondant à un mélange air-carburant dans les proportions stœchiométriques.

En outre, une deuxième sonde à oxygène 43b optionnelle, par exemple de type binaire ou proportionnelle peut être montée en aval du premier dispositif de post-traitement de manière à pouvoir corriger la valeur de consigne de la boucle de régulation de richesse, notamment dans le but d'ajuster la quantité d'oxygène stockée à l'intérieur du premier dispositif de dépollution 42.

Le système 40 de dépollution des gaz comprend en outre un deuxième dispositif de post-traitement 44 qui est ici un filtre à particules fines, et un troisième dispositif 46 de post-traitement, par exemple un catalyseur trois voies. Il peut encore comprendre une troisième sonde à oxygène 43c, par exemple de type binaire, montée en aval du deuxième dispositif 44, par exemple à des fins de diagnostic.

Le moteur est associé à un circuit de carburant comprenant, par exemple, des injecteurs de carburant (non référencés) injectant de l'essence directement dans chaque cylindre à partir d'un réservoir à carburant (non représenté).

Par ailleurs, le moteur comprend une unité électronique de commande 70 configurée pour commander les différents éléments du moteur à combustion interne à partir de données recueillies par des capteurs à différents endroits du moteur.

L'unité électronique de commande 70 comporte un module de calcul 72, un module de mesure 73 et un module de commande 74.

Dans le moteur à allumage commandé, le point de fonctionnement régime-charge du moteur est réglé par le calculateur 70 du moteur en ajustant notamment une quantité d'air, une quantité des gaz de recirculation EGR BP, et une quantité de carburant. Par « quantité », on entend ici un débit massique.

Le débit d'air et le débit des gaz de recirculation EGR BP peuvent être réglés sur des valeurs de consigne par le calculateur 70 du moteur en ajustant : la position du boîtier-papillon 30 ; la loi de distribution au travers du système de calage variable 50, notamment de manière prépondérante le calage des soupapes d'admission 51 ; la pression de suralimentation du turbocompresseur 18, qui commandent le débit gazeux total dans le moteur ; et, la position de la vanne « V EGR BP » 38c du circuit de recirculation 38, qui commande le seul débit des gaz de recirculation EGR BP.

Le débit de carburant est quant à lui réglé par le calculateur 70 du moteur de manière à régler la richesse du mélange air-carburant admis dans les cylindres du moteur sur une valeur de consigne λ_cons, par exemple une valeur de richesse égale à 1 correspondant aux proportions stœchiométriques du mélange air-carburant. On se sert notamment d'un régulateur (non représenté de type PID) et de la valeur de la richesse réelle λ_mes déduite de la mesure de la première sonde de richesse 43a pour régler ladite valeur de richesse en boucle fermée sur la valeur de consigne. Dans des modes de régulation on modifie la valeur de consigne λ_cons en fonction des indications de la deuxième sonde de richesse aval 43b, notamment pour permettre d'ajuster la masse d'oxygène stockée OS dans le premier dispositif de dépollution 42.

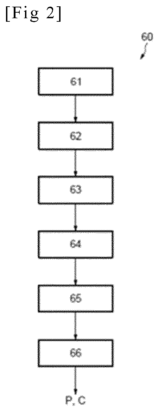

On va maintenant décrire en référence à la figure 2 un procédé 60 de gestion de couple fourni par un moteur à combustion interne de cycle Atkinson ou Miller tel que décrit précédemment. Un tel précédé est notamment mis en œuvre par le calculateur 70 à partir des mesures délivrées par les divers capteurs du moteur et en pilotant les divers éléments du moteur.

Le procédé 60 comprend une étape 61 préalable de détection de l'indisponibilité du système 50 de calage variable.

Le calculateur 70 est en effet configuré pour déterminer la présence d'un cas d'indisponibilité du système de calage variable. A titre d'exemple, pour détecter l'indisponibilité du système de calage variable 50, on peut soit employer des moyens de détection de panne dans le cas de systèmes de calage variable 50 électromécaniques, soit, dans le cas de systèmes de calage variable 50 à commande hydraulique, vérifier la température et/ou la pression d'huile en comparant des valeurs mesurées à des valeurs prédéterminées.

En cas d'indisponibilité du système de calage variable 50, lors d'une étape 62 suivante, le module de mesure 73 relève la valeur du retard de fermeture à l'admission (RFA) à laquelle le système de calage variable 50 est bloqué. Par exemple, le module de mesure 73 peut utiliser un capteur de recopie de position 53, installé sur le système de calage variable 50. Si le module de mesure 73 ne peut relever la valeur du RFA, à cause par exemple d'un capteur tombé en panne, il retiendra la valeur du RFA correspondant à la pleine charge, maximisant ainsi la valeur du débit admis ; en variante il pourra retenir une valeur de repos ou de sauvegarde.

Lors de l'étape 63 suivante, le module de calcul 72 calcule le taux de compression effectif TCE, défini selon l'équation suivante :

$$TCE = \frac{Vpatm}{Vmort} \qquad\qquad (1)$$

Avec :

TCE, le taux de compression effectif, adimensionnel ;
Vpatm, le volume qu'occuperait à la pression atmosphérique l'air qui se trouve dans la chambre de combustion au moment de la fermeture des soupapes d'admission exprimé en m$^3$ ; et
Vmort le volume résiduel de la chambre de combustion au point mort haut, d'une valeur constante et exprimé en m$^3$.

Pour calculer Vpatm on utilise l'équation empirique suivante :

$$P \times V = \nu \times R \times T \qquad\qquad (2)$$

Avec :

P, la pression exprimée en Pa ;
V, le volume exprimé en m$^3$ ;
v, la quantité de matière exprimée en moles ;
R, la constante universelle des gaz parfaits $\approx$ 8,314 J.K$^{-1}$.mol$^{-1}$; et
T, la température absolue exprimée en K ;

Dans l'équation (2) :

-    la quantité de d'air v, est obtenue à partir du débit gazeux total air frais et EGR BP (débit massique) en fonction de la durée d'admission et en incluant l'effet de remplissage qui tend à tenir compte des effets d'inertie liés aux vitesses élevées des gaz durant la distribution.

- la température T est la température mesurée dans le collecteur d'admission

Dans le cas d'un moteur atmosphérique, par exemple, le calculateur 70 du moteur est configuré pour limiter le taux de compression effectif à une valeur TCElim prédéterminée comprise entre 11 :1 et 13 :1.

Dans le cas d'un moteur suralimenté, par exemple, le calculateur 70 du moteur est configuré pour limiter le taux de compression effectif à une valeur TCElim prédéterminée comprise entre 9 :1 et 11 :1.

Lors de l'étape 64 suivante du procédé 60, le module de calcul 72 calcule un volume d'air Vmax à ne pas dépasser, exprimé en m3, à partir de la valeur adimensionnelle TCElim et du volume Vmort exprimé en m3, selon l'équation suivante :

$$Vmax = TCE_{lim} \times Vmort \qquad (3)$$

A partir du volume d'air maximal Vmax, le module de calcul 72 détermine une quantité d'air maximale admissible Mair, exprimée en mol, selon l'équation suivante :

$$Mair = \frac{P0 \times Vmax}{R \times Tcol} \qquad (4)$$

Avec :

P0, la pression atmosphérique exprimée en Pa ;
Vmax, le volume d'air maximal admissible exprimé en m3 ;
R, la constante universelle des gaz parfaits $\approx$8,314 J.K-1.mol-1; et
Tcol, la température du collecteur exprimée en K.

L'équivalent de masse d'air maximale est déterminé à partir de la quantité d'air maximale admissible Mair à travers la masse molaire de l'air.

A partir de la quantité d'air maximale admissible Mair, le module de calcul 72 détermine la pression maximale dans le collecteur Pcolmax à ne pas dépasser (étape 65), selon l'équation suivante :

$$Pcolmax = \frac{k \times Mair \times R \times Tcol}{V} \qquad (5)$$

Avec :

Pcolmax, pression maximale dans le collecteur, à ne pas dépasser, exprimée en Pa ;
k, un coefficient adimensionnel de remplissage du moteur ;
Mair, quantité d'air maximale admissible exprimée en mol ;
R, la constante universelle des gaz parfaits $\approx$8,314 J.K-1.mol-1;
Tcol, la température du collecteur exprimée en K ; et
V, le volume du cylindre pour l'angle du vilebrequin correspondant à la valeur mesurée ou retenue du RFA, exprimé en m3.

A partir de la quantité d'air maximale admissible Mair et du régime moteur, le calculateur 70 du moteur détermine enfin un couple maximal réalisable Cmax.

Avantageusement, le calculateur 70 du moteur, pilote le débit d'air frais passant par le boîtier papillon 30, c'est-à-dire en ajustant la pression dans le collecteur d'admission Ca grâce à une fermeture partielle du boîtier papillon 30, dans la limite du couple maximal Cmax.

L'invention permet ainsi, en cas d'enfoncement de la pédale d'accélération par le conducteur, correspondant à une requête de couple plus élevée, de limiter la consigne de couple à la valeur maximale réalisable Cmax.

Ainsi grâce à l'invention, on évite de dégrader fortement les performances du moteur, en cas d'indisponibilité du système de calage variable des soupapes à l'admission sur des moteurs à cycle asymétrique de type Atkinson ou Miller, à travers une consigne de couple maximal réalisable.

**Revendications**

1.  Procédé de contrôle du couple délivré par un moteur à combustion interne de véhicule automobile à cycle asymétrique d'Atkinson ou de Miller équipé d'un système de calage variable des soupapes à l'admission, en cas de dysfonctionnement du système de calage variable, **caractérisé en ce qu'**il comprend les étapes de :

    a) Détermination d'une valeur de retard de fermeture à l'admission (RFA) correspondant à un blocage du système de calage variable, ladite détermination étant réalisée en fonction d'une position mesurée ou mémorisée du retard de fermeture à l'admission ;
    b) Calcul d'un rapport entre le volume occupé à la pression atmosphérique par l'air admis dans la chambre de combustion, au moment de la fermeture des soupapes d'admission, et le volume résiduel de la chambre de combustion au point mort haut ;
    c) Calcul d'une quantité d'air maximale admissible pour une pression dans le collecteur d'admission égale à la pression atmosphérique et à la température du collecteur d'admission, en fonction d'une limitation du rapport calculé ;
    d) Calcul de la pression maximale dans le collecteur d'admission en fonction de la température instantanée du collecteur d'admission et d'un couple maximal réalisable, à partir de la quantité d'air maximale admissible ;
    e) Réglage de la pression dans le collecteur d'admission à une valeur égale à la pression maximale calculée et correspondant au couple maximal réalisable.

2.  Procédé selon la revendication 1, dans lequel la limitation du rapport calculé a une valeur prédéterminée comprise entre 11 :1 et 13 :1 si le moteur est atmosphérique.

3.  Procédé selon la revendication 1, dans lequel la limitation du rapport calculé a une valeur prédéterminée comprise entre 9 :1 et 11 :1 si le moteur est suralimenté.

4.  Procédé selon l'une quelconque des revendications 1 à 3, dans lequel la valeur du retard de fermeture à l'admission est égale à la valeur du retard de fermeture à l'admission mesurée.

5.  Procédé selon l'une quelconque des revendications 1 à 3, dans lequel la valeur du retard de fermeture à l'admission, quand elle n'est pas mesurable, est prise égale à la valeur du retard de fermeture à l'admission correspondant à la pleine charge ou égale à une position de sauvegarde.

6.  Procédé selon l'une quelconque des revendications 1 à 5, comprenant une étape préalable de détection de l'indisponibilité du système de calage variable.

7.  Système de contrôle du couple délivré par un moteur à combustion interne de véhicule automobile à cycle asymétrique d'Atkinson ou de Miller équipé d'un système de calage variable des soupapes à l'admission, en cas de dysfonctionnement du système de calage variable, **caractérisé en ce qu'**il comporte de :

    a) des moyens de détermination d'une valeur de retard de fermeture à l'admission (RFA) correspondant à un blocage du système de calage variable, ladite détermination étant réalisée en fonction d'une position mesuré ou mémorisée du retard de fermeture à l'admission ;
    b) des moyens de calcul d'un rapport entre le volume occupé à la pression atmosphérique par l'air admis dans la chambre de combustion, au moment de la fermeture des soupapes d'admission, et le volume résiduel de la chambre de combustion au point mort haut ;
    c) des moyens de limitation du rapport calculé ;
    d) des moyens de calcul d'une quantité d'air maximale admissible pour une pression dans le collecteur d'admission égale à la pression atmosphérique et à la température du collecteur d'admission, en fonction d'une limitation du rapport calculé ;
    e) des moyens de calcul de la pression maximale dans le collecteur d'admission en fonction de la température instantanée du collecteur d'admission et d'un couple maximal réalisable, à partir de la quantité d'air maximale admissible ;
    f) des moyens de réglage de la pression dans le collecteur d'admission à une valeur égale à la pression maximale calculée et correspondant au couple maximal réalisable.

8.  Système selon la revendication 7, muni de moyens de limitation du rapport calculé à une valeur prédéterminée comprise entre 11 :1 et 13 :1 si le moteur est atmosphérique.

9. Système selon la revendication 7, muni de moyens de limitation du rapport calculé à une valeur prédéterminée comprise entre 9 :1 et 11 :1 si le moteur est suralimenté.

10. Système selon l'une quelconque des revendications 7 à 9, comprenant des moyens de détection de l'indisponibilité du système de calage variable.

**Patentansprüche**

1. Verfahren zum Steuern des Drehmoments, das durch einen Verbrennungsmotor eines Kraftfahrzeugs mit asymmetrischem Atkinson- oder Miller-Zyklus, der mit einem variablen Einlassventilsteuersystem ausgestattet ist, abgegeben wird, im Falle einer Fehlfunktion des variablen Ventilsteuersystems, **dadurch gekennzeichnet, dass** es die Schritte umfasst zum:

   a) Bestimmen eines Werts einer Einlassschließverzögerung (RFA), der einer Blockierung des variablen Steuersystems entspricht, wobei das Bestimmen abhängig von einer gemessenen oder gespeicherten Position der Einlassschließverzögerung durchgeführt wird;
   b) Berechnen eines Verhältnisses zwischen dem Volumen, das die in die Brennkammer eingelassene Luft bei atmosphärischem Druck in dem Moment des Schließens der Einlassventile einnimmt, und dem Restvolumen der Brennkammer an dem oberen Totpunkt;
   c) Berechnen einer maximal zulässigen Luftmenge für einen Druck in dem Einlasskrümmer, der gleich dem Atmosphärendruck und der Temperatur des Einlasskrümmers ist, abhängig von einer Begrenzung des berechneten Verhältnisses;
   d) Berechnen des maximalen Drucks in dem Einlasskrümmer abhängig von der momentanen Temperatur des Einlasskrümmers und einem maximal erreichbaren Drehmoment, aus der maximal zulässigen Luftmenge;
   e) Einstellen des Drucks in dem Einlasskrümmer auf einen Wert, der gleich dem maximal berechneten Druck ist und dem maximal erreichbaren Drehmoment entspricht.

2. Verfahren nach Anspruch 1, wobei die Begrenzung des berechneten Verhältnisses einen vorbestimmten Wert zwischen 11 : 1 und 13 : 1 aufweist, falls es sich um einen Saugmotor handelt.

3. Verfahren nach Anspruch 1, wobei die Begrenzung des berechneten Verhältnisses einen vorbestimmten Wert zwischen 9 : 1 und 11 : 1 aufweist, falls es sich um einen aufgeladenen Motor handelt.

4. Verfahren nach einem der Ansprüche 1 bis 3, wobei der Wert der Einlassschließverzögerung gleich dem Wert der gemessenen Einlassschließverzögerung ist.

5. Verfahren nach einem der Ansprüche 1 bis 3, wobei der Wert der Einlassschließverzögerung, wenn er nicht messbar ist, gleich dem Wert der Einlassschließverzögerung angenommen wird, der der Volllast entspricht oder gleich einer Reserveposition ist.

6. Verfahren nach einem der Ansprüche 1 bis 5, umfassend einen vorherigen Schritt zum Erkennen der Nichtverfügbarkeit des variablen Steuersystems.

7. System zum Steuern des Drehmoments, das durch einen Verbrennungsmotor eines Kraftfahrzeugs mit asymmetrischem Atkinson- oder Miller-Zyklus, der mit einem variablen Einlassventilsteuersystem ausgestattet ist, abgegeben wird, im Falle einer Fehlfunktion des variablen Ventilsteuersystems, **dadurch gekennzeichnet, dass** es vorweist:

   a) Mittel zum Bestimmen eines Werts einer Einlassschließverzögerung (RFA), der einer Blockierung des variablen Steuersystems entspricht, wobei das Bestimmen abhängig von einer gemessenen oder gespeicherten Position der Einlassschließverzögerung durchgeführt wird;
   b) Mittel zum Berechnen des Verhältnisses zwischen dem Volumen, das die in die Brennkammer eingelassene Luft bei atmosphärischem Druck in dem Moment des Schließens der Einlassventile einnimmt, und dem Restvolumen der Brennkammer an dem oberen Totpunkt;
   c) Mittel zum Begrenzen des berechneten Verhältnisses;
   d) Mittel zum Berechnen einer maximal zulässigen Luftmenge für einen Druck in dem Einlasskrümmer, der gleich dem Atmosphärendruck und der Temperatur des Einlasskrümmers ist, abhängig von einer Begrenzung des berechneten Verhältnisses;

e) Mittel zum Berechnen des maximalen Drucks in dem Einlasskrümmer abhängig von der momentanen Temperatur des Einlasskrümmers und einem maximal erreichbaren Drehmoment, aus der maximal zulässigen Luftmenge;

f) Mittel zum Einstellen des Drucks in dem Einlasskrümmer auf einen Wert, der gleich dem maximal berechneten Druck ist und dem maximal erreichbaren Drehmoment entspricht.

8. System nach Anspruch 7, das mit Mitteln zum Begrenzen des berechneten Verhältnisses auf einen vorbestimmten Wert zwischen 11 : 1 und 13 : 1 ausgestattet ist, falls es sich um einen Saugmotor handelt.

9. System nach Anspruch 7, das mit Mitteln zum Begrenzen des berechneten Verhältnisses auf einen vorbestimmten Wert zwischen 9 : 1 und 11 : 1 ausgestattet ist, falls es sich um einen aufgeladenen Motor handelt.

10. System nach einem der Ansprüche 7 bis 9, umfassend Mittel zum Erkennen der Nichtverfügbarkeit des variablen Steuersystems.

## Claims

1. Method for controlling the torque output by a motor vehicle internal combustion engine which has an asymmetric Atkinson or Miller cycle and is equipped with a variable intake valve timing system, in the event of malfunction of the variable timing system, **characterized in that** it comprises the steps of:

a) determination of an intake closure delay (ICD) value corresponding to a blockage of the variable timing system, said determination being performed on the basis of a measured or stored position of the intake closure delay;

b) calculation of a ratio between the volume occupied at atmospheric pressure by the air admitted into the combustion chamber, at the moment the intake valves close, and the residual volume of the combustion chamber at top dead center;

c) calculation of a maximum permissible air quantity for a pressure in the intake manifold equal to atmospheric pressure and to the temperature of the intake manifold, based on a limitation of the calculated ratio;

d) calculation of the maximum pressure in the intake manifold based on the instantaneous temperature of the intake manifold and a maximum achievable torque, from the maximum permissible air quantity;

e) adjustment of the pressure in the intake manifold to a value equal to the calculated maximum pressure and corresponding to the maximum torque achievable.

2. Method according to claim 1, wherein the limitation of the calculated ratio has a predetermined value between 11:1 and 13:1 if the engine is naturally aspirated.

3. Method according to claim 1, wherein the limitation of the calculated ratio has a predetermined value between 9:1 and 11:1 if the engine is supercharged.

4. Method according to any of claims 1 to 3, wherein the value of the intake closure delay is equal to the measured value of the intake closure delay.

5. Method according to any of claims 1 to 3, wherein the value of the intake closure delay, when it is not measurable, is taken equal to the value of the intake closure delay corresponding to full load or equal to a backup position.

6. Method according to any of claims 1 to 5, comprising a prior step of detecting the unavailability of the variable timing system.

7. System for controlling the torque output by a motor vehicle internal combustion engine which has an asymmetric Atkinson or Miller cycle and is equipped with a variable intake valve timing system, in the event of malfunction of the variable timing system, **characterized in that** it comprises:

a) means for determining an intake closure delay (ICD) value corresponding to a blockage of the variable timing system, said determination being performed on the basis of a measured or stored position of the intake closure delay;

b) means for calculating a ratio between the volume occupied at atmospheric pressure by the air admitted to the combustion chamber, at the moment the intake valves close, and the residual volume of the combustion chamber at top dead center;

c) means for limiting the calculated ratio;

d) means for calculating a maximum permissible air quantity for a pressure in the intake manifold equal to atmospheric pressure and to the temperature of the intake manifold, based on a limitation of the calculated ratio;

e) means for calculating the maximum pressure in the intake manifold based on the instantaneous pressure of the intake manifold and a maximum achievable torque, from the maximum permissible air quantity;

f) means for adjusting the pressure in the intake manifold to a value equal to the maximum pressure calculated and corresponding to the maximum torque achievable.

8. System according to claim 7, provided with means for limiting the calculated ratio to a predetermined value between 11:1 and 13:1 if the engine is naturally aspirated.

9. System according to claim 7, provided with means for limiting the calculated ratio to a predetermined value between 9:1 and 11:1 if the engine is supercharged.

10. System according to any of claims 7 to 9, comprising means for detecting the unavailability of the variable timing system.

EP 4 163 484 B1

[Fig 1]

[Fig 2]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102020112111 A1